# EUROPEAN PATENT APPLICATION

(11) **EP 4 166 723 A1**
(43) Date of publication of application: **19.04.2023**
(21) Application number: 22199969.1
(22) Date of filing: 06.10.2022
(51) Int. Cl.: E02F 3/42

(54) **DRIVE DEVICE AND WORK MACHINE**

(30) Priority: 14.10.2021 JP 2021169010
(71) Applicant: Yanmar Holdings Co., Ltd., Osaka-shi, Osaka (JP)
(72) Inventor: HIRAMATSU, Toshifumi, Osaka (JP); MIZUKURA, Yoshiharu, Osaka (JP); SAIKI, Miyuki, Osaka (JP); YOKOUE, Toshiyuki, Osaka (JP); YAKUSHIGAWA, Kaede, Osaka (JP)
(74) Representative: Dennemeyer & Associates S.A.

(57) **Abstract**

[Problem] To provide a drive device and a work machine capable of restraining breakage of a motor.

[Solution] A drive device 31 includes a first disc 330, a second disc portion 1340, and an elastic body 350. The first disc 330 is connected to a rotation shaft portion of the motor and rotates with rotation of the rotation shaft portion. The second disc portion 1340 is connected to the first disc 330 and rotates with rotation of the first disc 330. The elastic body 350 is connected to the second disc portion 1340. The second disc portion 1340 is connected to a load. The elastic body 350 restrains transmission of load fluctuation to the first disc 330.

## Description

### TECHNICAL FIELD

The present invention relates to a drive device and a work machine.

### BACKGROUND ART

The actuator described in Patent Document 1 includes a motor, a load, and an elastic spring. The motor drives the load through the elastic spring.

### PRIOR ART DOCUMENT

### PATENT DOCUMENT

Patent Document 1: JP-A-2014-140300

### SUMMARY OF INVENTION

### TECHNICAL PROBLEM

However, in the actuator described in Patent Document 1, when a load fluctuates due to an external force when the motor is stopped, the fluctuation of the load is transmitted to the motor via the elastic spring. As a result, in the actuator described in Patent Document 1, since the first disc and the second disc portion do not exist, the motor may break unless the actuator is increased in size.

The present invention has been made in view of the above problems, and an object of the present invention is to provide a drive device and a work machine capable of restraining breakage of a motor.

### SOLUTION TO PROBLEM

According to one aspect of the present invention, a drive device includes a first disc, a second disc portion, and an elastic body. The first disc is connected to a rotation shaft portion of the motor and rotates with rotation of the rotation shaft portion of the motor. The second disc portion is connected to the first disc and rotates with rotation of the first disc. The elastic body is connected to the second disc portion. The second disc portion is connected to a load. The elastic body restrains transmission of fluctuation of the load to the first disc.

According to another aspect of the present invention, a work machine includes the above drive device, a load connected to the drive device, and a control unit that controls the drive device.

### ADVANTAGEOUS EFFECTS OF INVENTION

According to the drive device and the working machine of the present invention, breakage of the motor can be restrained.

### BRIEF DESCRIPTION OF DRAWINGS

Fig. 1 is a view illustrating a work machine according to a first embodiment of the present invention;
Fig. 2 is a perspective view illustrating a boom SEA according to the first embodiment;
Fig. 3 is a perspective view illustrating the boom SEA according to the first embodiment;
Fig. 4 is a cross-sectional view illustrating the boom SEA according to the first embodiment;
Fig. 5 is a block diagram illustrating a hydraulic configuration and an electrical configuration of the work machine according to the first embodiment;
Fig. 6 is a cross-sectional view illustrating the boom SEA according to the first embodiment;
Fig. 7 is a diagram illustrating a work unit according to the present embodiment;
Fig. 8 is a diagram illustrating the work unit according to the present embodiment;
Fig. 9 is a perspective view illustrating a boom SEA according to a second embodiment of the present invention;
Fig. 10 is a perspective view illustrating the boom SEA according to the second embodiment;
Fig. 11 is a cross-sectional view illustrating the boom SEA according to the second embodiment;
Fig. 12 is a view illustrating the work machine according to the present embodiment; and
Fig. 13 is a cross-sectional view illustrating the boom SEA according to the present embodiment.

### DESCRIPTION OF EMBODIMENTS

Hereinafter, embodiments of the present invention will be described with reference to the drawings. However, the present invention is not limited to the following embodiments. Note that the description of the overlapping portions may be appropriately omitted. In addition, in the drawings, the same or corresponding portions are denoted by the same reference numerals, and the description will not be repeated.

### <First embodiment>

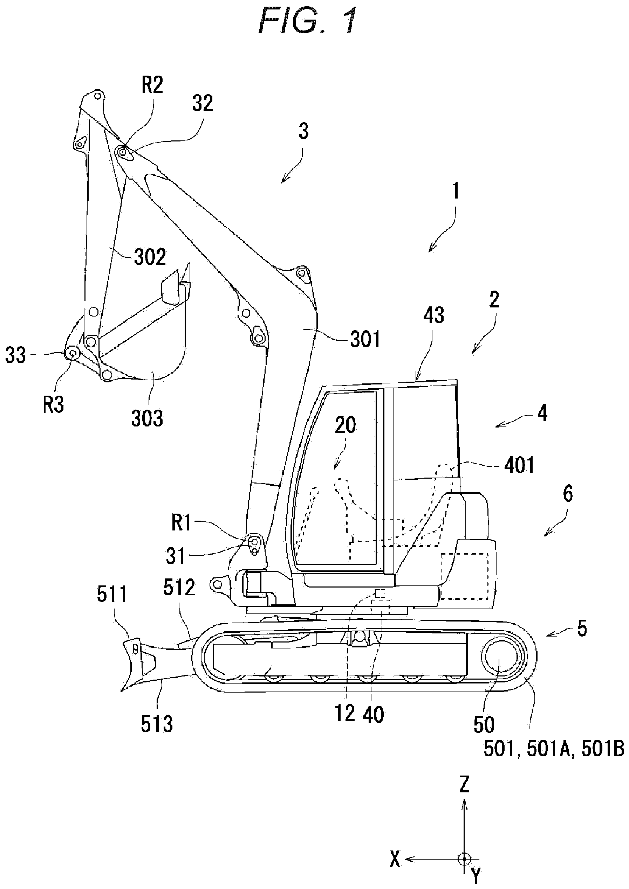

First, a work machine 1 according to a first embodiment of the present invention will be described with reference to Fig. 1. The work machine 1 includes, for example, a construction machine or an agricultural machine, and may be a self-propelled type or a fixed type. Hereinafter, the first embodiment will be described by taking a case where the work machine 1 is a backhoe as an example. The backhoe is an example of a construction machine. Note that, in the first embodiment, an X axis, a Y axis, and a Z axis orthogonal to each other are illustrated in the drawing. The Z axis is parallel to the vertical direction, and the X axis and the Y axis are parallel to the horizontal direction.

Fig. 1 is a view illustrating the work machine 1 according to the first embodiment. As illustrated in Fig. 1, the work machine 1 of the first embodiment includes a main body portion 2, a work unit 3, an engine unit 6, and a traveling body 5.

The traveling body 5 causes the work machine 1 to travel. In the first embodiment, the traveling body 5 is a crawler traveling device. That is, the traveling body 5 includes a traveling motor 50, a crawler 501, a blade 511, a blade cylinder 512, and a blade arm 513.

The blade 511 forms an earth removal mechanism and is used for ground leveling work and the like. The blade 511 has a plate shape. The blade cylinder 512 drives the blade 511. The blade arm 513 supports the blade 511.

In the present specification, the blade 511 is disposed on the positive direction side of the X axis with respect to the crawler 501. The positive direction of the X axis indicates a direction from the crawler 501 toward the blade 511.

The crawler 501 is a pair of crawlers 501. The pair of crawlers 501 includes a first crawler 501A and a second crawler 501B. The first crawler 501A is disposed on the positive direction side of the Y axis with respect to the second crawler 501B. The positive direction of the Y axis indicates a direction from the second crawler 501B toward the first crawler 501A.

The traveling motor 50 rotationally drives the crawler 501. The traveling motor 50 is, for example, a hydraulic motor. The traveling motors 50 are a pair of traveling motors 50. The pair of traveling motors 50 includes a first traveling motor and a second traveling motor. The first traveling motor rotationally drives the first crawler 501A. The second traveling motor rotationally drives the second crawler 501B.

The main body portion 2 supports the work unit 3. The main body portion 2 includes a swing body 4. The swing body 4 is supported by the traveling body 5. Specifically, for example, the swing body 4 is disposed above traveling body 5 via a swing bearing. The swing body 4 is swingably supported by the traveling body 5.

The swing body 4 includes a cabin 43 and a swing motor 40. The engine unit 6 is disposed in the swing body 4.

The cabin 43 accommodates the driver's seat 401 and an operation unit 20. The operator sits on the driver's seat 401. In the present specification, the left side as viewed from the operator sitting on the driver's seat 401 may be referred to as a left direction. In addition, in the present specification, the right side as viewed from the operator sitting on the driver's seat 401 may be referred to as a right direction. In addition, in the present specification, the front side as viewed from the operator sitting on the driver's seat 401 may be referred to as a front direction. In addition, in the present specification, the rear side as viewed from the operator sitting on the driver's seat 401 may be referred to as a rear direction. In Fig. 1, the front direction coincides with the positive direction of the X axis. In addition, the left direction coincides with the positive direction of the Y axis.

The operation unit 20 can operate each of the work unit 3, the swing body 4, and the traveling body 5. The operator can operate the work unit 3, the swing body 4, and the traveling body 5 by sitting on the driver's seat 401 and operating the operation unit 20. The operation unit 20 includes a traveling lever (not illustrated) that operates the traveling body 5. The traveling lever can cause the traveling body 5 to travel regardless of the swing angle of the swing body 4. In Fig. 1, when the traveling lever is tilted forward of the machine body (in the positive direction of the X axis in the drawing), the work machine 1 travels in the positive direction of the X axis in the drawing. In addition, in a case where the swing body 4 swings 180° and faces the negative direction of the X axis in the drawing, when the traveling lever is tilted forward of the machine body (the negative direction of the X axis in the drawing), the work machine 1 travels in the positive direction of the X axis in the drawing.

The swing motor 40 swings the cabin 43. Specifically, the swing motor 40 swings the cabin 43 via a swing bearing. The swing motor 40 is, for example, a hydraulic motor. For example, the swing motor 40 swings the cabin 43 in the left rotation direction or the right rotation direction with respect to the traveling body 5 according to the operation of the operation unit 20.

The traveling body 5 is driven by receiving power from the engine unit 6, and causes the work machine 1 to travel according to the operation of the operation unit 20.

The engine unit 6 drives a hydraulic pump 7 (main pump 71) to be described later and discharges pressurized oil to drive the swing motor 40, the first traveling motor, and the second traveling motor. Note that the pressurized oil is hydraulic oil to which high pressure has been applied.

The work unit 3 executes work. Specifically, for example, the work unit 3 executes earth excavation work according to the operation of the operation unit 20.

Next, the work unit 3 will be described in detail. The work unit 3 includes a boom 301, an arm 302, a bucket 303, a boom series elastic actuator (SEA) 31, an arm SEA 32, and a bucket SEA 33. Each of the boom SEA 31, the arm SEA 32, and the bucket SEA 33 is an example of a "drive device".

The boom 301 is supported by the swing body 4 to be swingable about a first rotation support point R1.

The boom SEA 31 is disposed at the first rotation support point R1 and actuates the boom 301. Specifically, the boom SEA 31 swings the boom 301 about the first rotation support point R1.

The arm 302 is swingably supported by the boom 301 about a second rotation support point R2.

The arm SEA 32 is disposed at the second rotation support point R2 and actuates the arm 302. Specifically, the arm SEA 32 swings the arm 302 about the second rotation support point R2. The arm SEA 32 has the same configuration as the boom SEA 31 described above.

The bucket 303 is a type of attachment. The bucket 303 is swingably supported about a third rotation support point R3 by the arm 302 via a bucket link (not illustrated) at the distal end of the arm 302. In addition, a crane hook (not illustrated) for hanging work is attached to the bucket link.

The bucket SEA 33 is disposed at the third rotation support point R3 and actuates the bucket 303. Specifically, the bucket SEA 33 swings the bucket 303 about the third rotation support point R3. The bucket SEA 33 has the same configuration as the boom SEA 31 described above.

In the work machine 1 having the above-described configuration, the traveling body 5 travels by the rotational drive of the traveling motor 50, and the swing body 4 swings by the swing drive of the swing motor 40. In addition, the bucket 303 moves up and down and back and forth by rotational driving of the boom SEA 31 and the arm SEA 32. Furthermore, the bucket 303 performs a dumping motion or a cloud motion by the rotational drive of the bucket SEA 33.

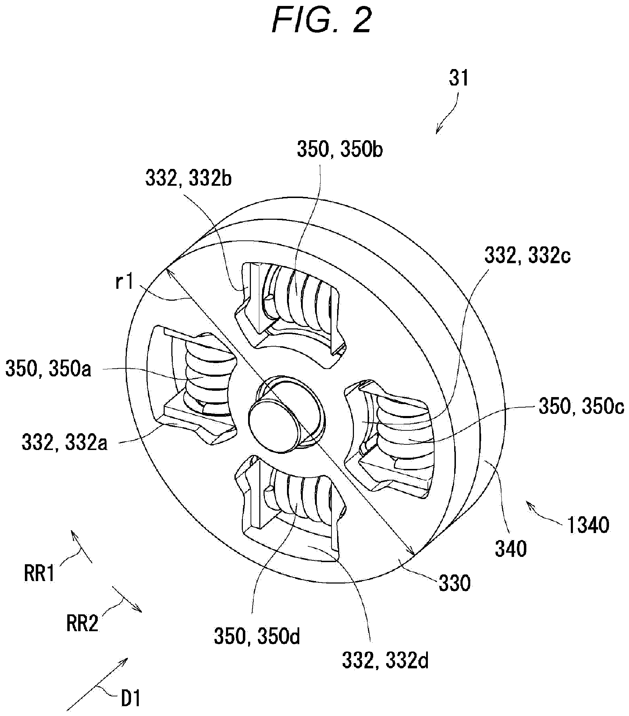

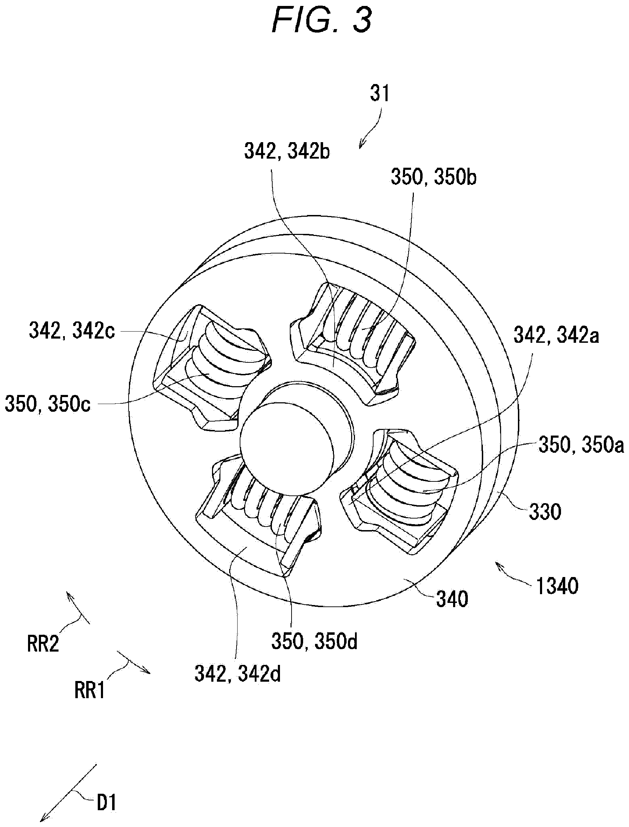

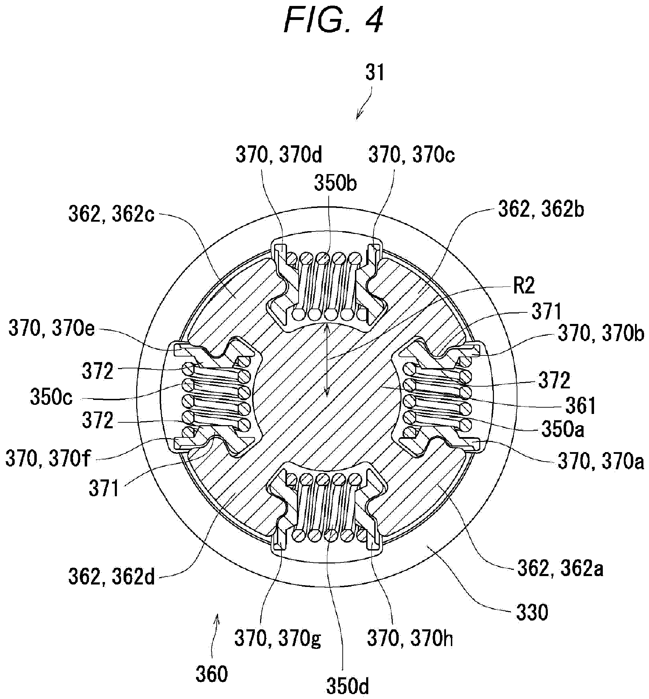

Next, the boom SEA 31 will be described in detail with reference to Figs. 2 to 4. Figs. 2 and 3 are perspective views illustrating the boom SEA 31. Fig. 4 is a cross-sectional view illustrating the boom SEA 31.

As illustrated in Figs. 2 to 4, the boom SEA 31 includes a motor (not illustrated), a first disc 330, a second disc portion 1340, and a plurality of elastic bodies 350.

The motor includes a rotation shaft portion. The rotation shaft portion extends along a predetermined direction D1. The rotation shaft portion rotates around the predetermined direction D1. The rotation shaft portion rotates in a first rotation direction RR1 or rotates in a second rotation direction RR2. The second rotation direction RR2 is a reverse rotation direction of the first rotation direction RR1. Note that a speed reducer may be connected to the rotation shaft portion of the motor.

The diameter of the first disc 330 is substantially a first distance r1. The first disc 330 is connected to the rotation shaft portion. For example, the central portion of the first disc 330 is connected to the rotation shaft portion on the side of the predetermined direction D1. As a result, the first disc 330 rotates with the rotation of the rotation shaft portion. When the rotation shaft portion rotates in the first rotation direction RR1, the first disc 330 also rotates in the first rotation direction RR1. On the other hand, when the rotation shaft portion rotates in the second rotation direction RR2, the first disc 330 also rotates in the second rotation direction RR2

The first disc 330 has a plurality of first opening portions 332. Each of the plurality of first opening portions 332 penetrates in the predetermined direction D1. The plurality of first opening portions 332 include a first opening portion 332a, a first opening portion 332b, a first opening portion 332c, and a first opening portion 332d. The first opening portion 332a, the first opening portion 332b, the first opening portion 332c, and the first opening portion 332d are disposed at equal intervals along the circumferential direction.

The second disc portion 1340 is connected to the first disc 330 and rotates with rotation of the first disc 330. Specifically, the second disc portion 1340 includes a second disc 340 and a third disc 360.

The diameter of the second disc 340 is substantially the first distance r1. In addition, the second disc 340 includes the third disc 360 and is connected to the first disc 330.

The central portion of the third disc 360 is connected to the boom 301 illustrated in Fig. 1. The boom 301 is an example of a "load". Specifically, the third disc 360 is connected to the first disc 330 and the second disc 340 via the elastic body 350. The second disc 340 is disposed in the predetermined direction D1 from the first disc 330. In detail, the third disc 360 is disposed in the predetermined direction D1 with respect to the first disc 330. The second disc 340 is disposed in the predetermined direction D1 from the third disc 360.

The second disc 340 has a plurality of second opening portions 342. Each of the plurality of second opening portions 342 penetrates in the predetermined direction D1. The plurality of second opening portions 342 include a second opening portion 342a, a second opening portion 342b, a second opening portion 342c, and a second opening portion 342d. The second opening portion 342a, the second opening portion 342b, the second opening portion 342c, and the second opening portion 342d are disposed at equal intervals along the circumferential direction.

Each of the plurality of elastic bodies 350 is, for example, a coil spring having a first length XA and a spring constant K. Each of the plurality of elastic bodies 350 is connected to the first disc 330. In addition, each of the plurality of elastic bodies 350 is connected to the second disc portion 1340. In detail, each of the plurality of elastic bodies 350 is disposed across the plurality of first opening portions 332 and the plurality of second opening portions 342. Each of the plurality of elastic bodies 350 is stretchable in a tangent direction along the circumferential direction. For example, each of the plurality of elastic bodies 350 is stretchable from the first length XA to a second length XB.

The plurality of elastic bodies 350 includes an elastic body 350a, an elastic body 350b, an elastic body 350c, and an elastic body 350d. The elastic body 350a is disposed across the first opening portion 332a and the second opening portion 342a. The elastic body 350b is disposed across the first opening portion 332b and the second opening portion 342b. The elastic body 350c is disposed across the first opening portion 332c and the second opening portion 342c. The elastic body 350d is disposed across the first opening portion 332d and the second opening portion 342d.

For example, when a motor rotates in the first rotation direction RR1, the first disc 330 rotates in the first rotation direction RR1. When the first disc 330 rotates in the first rotation direction RR1, the first opening portion 332 presses one end portion of the elastic body 350. As a result, the elastic body 350 contracts to the second length XB, and the other end portion of the elastic body 350 presses the third disc 360. In other words, the elastic body 350 transmits the rotation of the first disc 330 to the third disc 360. As a result, the third disc 360 rotates in the first rotation direction RR1. Thus, the boom 301 fluctuates.

On the other hand, when a motor rotates in the second rotation direction RR2, the first disc 330 rotates in the second rotation direction RR2. When the first disc 330 rotates in the second rotation direction RR2, the first opening portion 332 presses the other end portion of the elastic body 350. As a result, the elastic body 350 contracts to the second length XB, and one end portion of the elastic body 350 presses the third disc 360. In other words, the rotation of the first disc 330 is transmitted to the third disc 360. As a result, the third disc 360 rotates in the second rotation direction RR2. Thus, the boom 301 fluctuates.

When the motor is stopped, the boom 301 may fluctuate due to external force. As a result, the fluctuation of the boom 301 is transmitted to the third disc 360. For example, the third disc 360 rotates in the first rotation direction RR1. At this time, the elastic body 350 prevents the fluctuation of the boom 301 from being transmitted to the first disc 330. Specifically, when the boom 301 fluctuates within a predetermined range, the elastic body 350 restrains the fluctuation of boom 301 from being transmitted to the first disc 330 via the third disc 360.

Here, a principle of restraining transmission of the fluctuation of the boom 301 to the first disc 330 will be described. First, when the boom 301 fluctuates, the third disc 360 rotates in the first rotation direction RR1. When the third disc 360 rotates in the first rotation direction RR1, the third disc 360 presses one end portion of the elastic body 350. As a result, the elastic body 350 contracts in the range of the first length XA to the second length XB. At this time, the other end portion of the elastic body 350 presses the first disc 330, but the energy due to the external force is buffered by the amount of contraction of the elastic body 350. Thus, the energy transmitted to the motor is buffered.

As described above with reference to Figs. 1 to 4, even if the boom 301 and the like moves by external force when the motor is stopped, the elastic body 350 can restrain transmission of the fluctuation of the boom 301 and the like to the first disc 330. In detail, the energy due to the external force is buffered by the amount of contraction of the elastic body 350. As a result, it is possible to restrain breakage of the motor at the time of stop. In addition, even if the boom 301 and the like is fluctuated, the force is not transmitted to the motor, in a manner that the position of the boom 301 and the like can be adjusted by a human hand during the work.

In addition, since the elastic body 350 is disposed between the first disc 330 and the second disc portion 1340, the boom SEA 31 can be downsized.

In addition, since the elastic body 350 is disposed across the first opening portion 332 and the second opening portion 342, the boom SEA 31 can be further downsized.

In addition, since the plurality of elastic bodies 350 is disposed, a load per one elastic body 350 can be reduced, and thus, the elastic body 350 having a small spring constant K can be used. As a result, the boom SEA 31 can be further downsized.

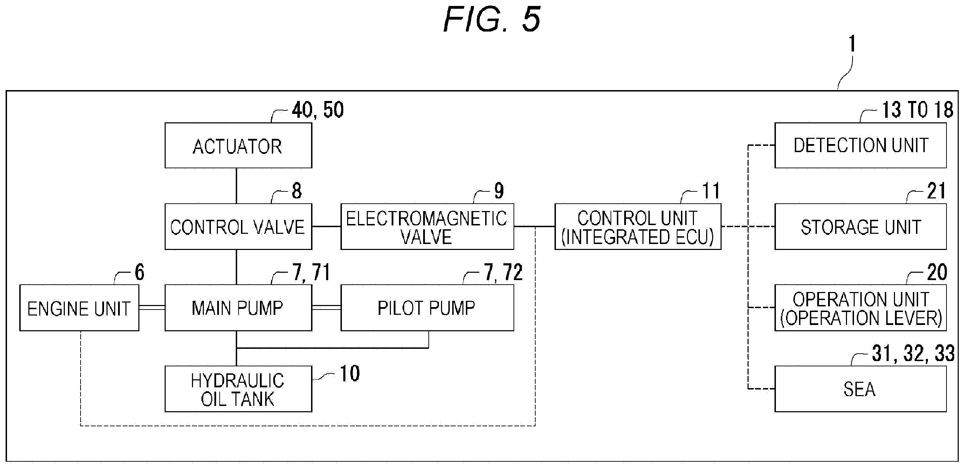

The operation of the work machine 1 will be described in more detail with reference to Fig. 5. Fig. 5 is a block diagram schematically illustrating hydraulic and electrical configurations of the work machine 1.

As illustrated in Fig. 5, the work machine 1 further includes the hydraulic pumps 7 (main pump 71 and pilot pump 72), a control valve 8, an electromagnetic valve 9, a hydraulic oil tank 10, a control unit 11, detection units 13 to 18, and a storage unit 21.

The engine unit 6 drives the hydraulic pumps 7 (main pump 71 and pilot pump 72). As a result, the hydraulic pump 7 (main pump 71) discharges the pressurized oil from the hydraulic oil tank 10 and feeds the pressurized oil to the control valve 8. The control valve 8 supplies pressurized oil to the swing motor 40 and the traveling motors 50 (first traveling motor and second traveling motor). As a result, the swing motor 40 and the traveling motors 50 are driven.

The hydraulic pump 7 (pilot pump 72) discharges the pilot oil from the hydraulic oil tank 10 and feeds the pilot oil to the electromagnetic valve 9. The electromagnetic valve 9 outputs pilot oil according to the operation of the operation unit 20 connected via the control unit 11, to the control port of the control valve 8. As a result, the control valve 8 supplies pressurized oil of which the direction and flow rate are controlled according to the pilot oil, to the swing motor 40 and the traveling motors 50.

In addition, the work machine 1 further includes a first detection unit 13, a second detection unit 14, a third detection unit 15, a fourth detection unit 16, a fifth detection unit 17, and a sixth detection unit 18. Each of the detection units 13 to 18 is connected to control unit 11.

For example, the first detection unit 13 is includes an angle sensor, and detects the angle of the boom 301. The first detection unit 13 detects a rotation angle of the boom 301. The first detection unit 13 is, for example, a potentiometer or a rotary encoder. The first detection unit 13 outputs the detection result to the control unit 11.

For example, the second detection unit 14 is includes an angle sensor, and detects the angle of the arm 302. The second detection unit 14 detects a rotation angle of the arm 302. The second detection unit 14 is, for example, a potentiometer or a rotary encoder. The second detection unit 14 outputs the detection result to the control unit 11.

For example, the third detection unit 15 is includes an angle sensor, and detects the angle of the bucket 303. The third detection unit 15 detects a rotation angle of the bucket 303. The third detection unit 15 is, for example, a potentiometer or a rotary encoder. The third detection unit 15 outputs the detection result to the control unit 11.

The fourth detection unit 16 detects the length of the elastic body 350 of the boom SEA 31. The fourth detection unit 16 is, for example, a rotary encoder disposed at both ends of the elastic body 350. The fourth detection unit 16 outputs the detection result to the control unit 11.

The fifth detection unit 17 detects the length of the elastic body 350 of the arm SEA 32. The fifth detection unit 17 is, for example, a rotary encoder disposed at both ends of the elastic body 350. The fifth detection unit 17 outputs the detection result to the control unit 11.

The sixth detection unit 18 detects the length of the elastic body 350 of the bucket SEA 33. The sixth detection unit 18 is, for example, a rotary encoder disposed at both ends of the elastic body 350. The sixth detection unit 18 outputs the detection result to the control unit 11.

The storage unit 21 includes a storage device and stores data and a computer program. Specifically, the storage unit 21 includes a main storage device such as a semiconductor memory, and an auxiliary storage device such as a semiconductor memory, a solid state drive, and/or a hard disc drive. The storage unit 21 may include a removable medium.

The control unit 11 controls the work machine 1. The control unit 11 includes a processor such as an integrated electronic control unit (ECU). The processor of the control unit 11 controls the work machine 1 by executing a computer program stored in the storage device of the storage unit 21.

The control unit 11 calculates the force acting on the boom 301 based on the detection result of the fourth detection unit 16. Specifically, the control unit 11 calculates the length of the elastic body 350 of the boom SEA 31 based on the detection result of the fourth detection unit 16. The control unit 11 calculates the force acting on the boom 301 based on the length of the elastic body 350 of the boom SEA 31. As a result, the control unit 11 can recognize the force acting on the boom 301.

In addition, the control unit 11 calculates the force acting on the arm 302 based on the detection result of the fifth detection unit 17. Specifically, the control unit 11 calculates the length of the elastic body 350 of the arm SEA 32 based on the detection result of the fifth detection unit 17. The control unit 11 calculates the force acting on the arm 302 based on the length of the elastic body 350 of the arm SEA 32. As a result, the control unit 11 can recognize the force acting on the arm 302.

Furthermore, the control unit 11 calculates the force acting on the bucket 303 based on the detection result of the sixth detection unit 18. Specifically, the control unit 11 calculates the length of the elastic body 350 of the bucket SEA 33 based on the detection result of the sixth detection unit 18. The control unit 11 calculates the force acting on the bucket 303 based on the length of the elastic body 350 of the bucket SEA 33. As a result, the control unit 11 can recognize the force acting on the bucket 303.

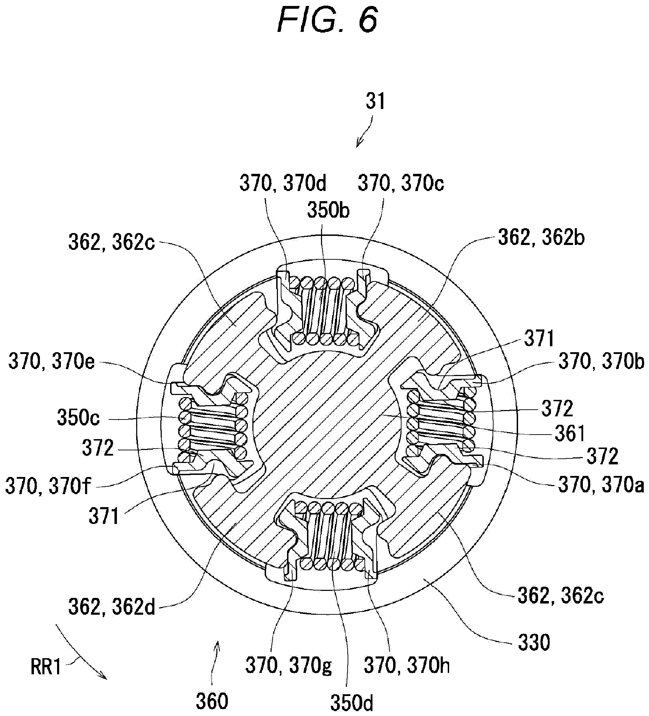

Next, the boom SEA 31 according to the first embodiment will be described in detail with reference to Figs. 4 and 6. Fig. 6 is a cross-sectional view illustrating the boom SEA 31. Specifically, Fig. 4 is a cross-sectional view illustrating the boom SEA 31 when the motor is not rotating. Fig. 6 is a cross-sectional view illustrating the boom SEA 31 when the motor is rotating.

As illustrated in Figs. 4 and 6, the boom SEA 31 further includes a plurality of contact members 370.

The third disc 360 includes a circular plate body 361 and four protrusion portions 362. The diameter of the circular plate body 361 is substantially a second distance r2. The substantial second distance r2 is smaller than the substantial first distance r1.

Each of the four protrusion portions 362 protrudes in the radial direction from the circular plate body 361. The four protrusion portions 362 include a protrusion portion 362a, a protrusion portion 362b, a protrusion portion 362c, and a protrusion portion 362d. Each of the four protrusion portions 362 has a substantially T-shape. Each of the four protrusion portions 362 includes an arc portion and a separation portion. The separation portion extends along the radial direction. The separation portion couples the circular plate body 361 and the arc portion. The arcuate portion extends along the circumferential direction. Each of both ends of the arc portion has a substantially hemispherical shape.

The plurality of contact members 370 is respectively disposed at both end portions of the plurality of elastic bodies 350. The plurality of contact members 370 include a first contact member 370a, a second contact member 370b, a third contact member 370c, a fourth contact member 370d, a fifth contact member 370e, a sixth contact member 370f, a seventh contact member 370g, and an eighth contact member 370h.

Each shape of the plurality of contact members 370 is a plate-shaped body. A substantially hemispherical concave portion 371 is disposed on one end surface of the plate-shaped body, and a substantially hemispherical convex portion 372 is disposed on the other end surface of the plate-shaped body. The shape of the concave portion 371 is, for example, a hemispherical shape.

The first contact member 370a is connected to one end portion of the elastic body 350a. Specifically, the convex portion 372 of the first contact member 370a is rotatably inserted into one end portion of the elastic body 350a. In addition, the arc portion of the protrusion portion 362 is rotatably inserted into the concave portion 371 of the first contact member 370a.

In addition, the second contact member 370b is connected to the other end portion of the elastic body 350a. Specifically, the convex portion 372 of the second contact member 370b is rotatably inserted into the other end portion of the elastic body 350a. In addition, the arc portion of the protrusion portion 362 is rotatably inserted into the concave portion 371 of the second contact member 370b.

The third contact member 370c and the fourth contact member 370d are disposed at both end portions of the elastic body 350b, respectively. The fifth contact member 370e and the sixth contact member 370f are disposed at both end portions of the elastic body 350c, respectively. The seventh contact member 370g and the eighth contact member 370h are disposed at both end portions of the elastic body 350d, respectively.

Here, a principle of restraining transmission of the fluctuation of the boom 301 to the first disc 330 will be described. For example, when the boom 301 fluctuates, the third disc 360 rotates in the first rotation direction RR1. When the third disc 360 rotates in the first rotation direction RR1, the arc portion of the protrusion portion 362 presses the contact member 370 on the other end portion side of the elastic body 350. The contact member 370 presses the other end portion of the elastic body 350 while rotating. When the contact member 370 presses the other end portion of the elastic body 350, the contact member 370 rotates to apply a substantially uniform force to the inner peripheral side portion and the outer peripheral side portion of the elastic body 350. In other words, the contact member 370 can restrain non-uniform application of a force to the inner peripheral portion and the outer peripheral portion of the elastic body 350. As a result, the elastic body 350 can act with the spring constant K.

As a result, the elastic body 350 contracts in the range of the first length XA to the second length XB. At this time, the other end portion of the elastic body 350 presses the first disc 330, but the energy due to the external force is buffered by the amount of contraction of the elastic body 350. Thus, the energy transmitted to the motor is buffered.

As described above, even if the boom 301 and the like moves by external force when the motor is stopped, the elastic body 350 can restrain transmission of the fluctuation of the boom 301 and the like to the first disc 330. As a result, it is possible to restrain breakage of the motor at the time of stop.

### <Second embodiment>

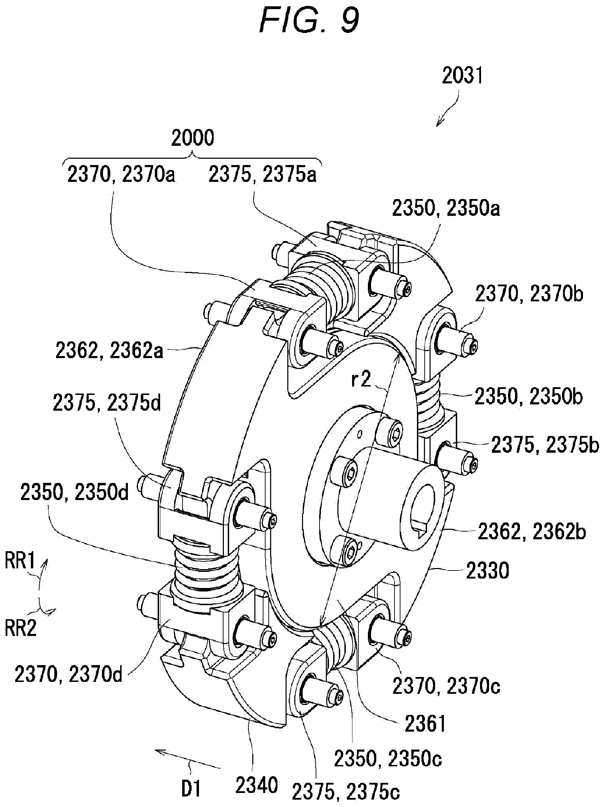

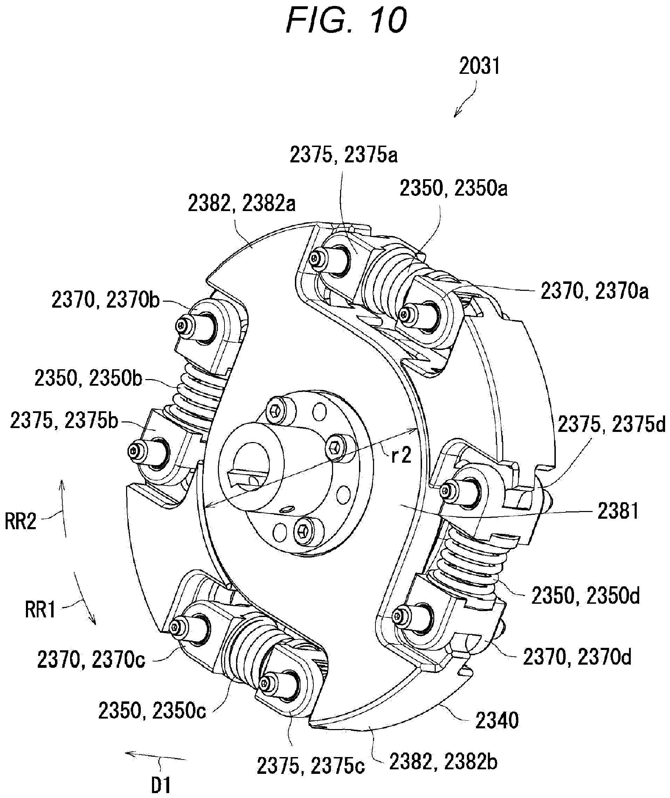

Next, a boom SEA 2031 will be described in detail with reference to Figs. 9 and 10. Figs. 9 and 10 are perspective views illustrating the boom SEA 2031.

As illustrated in Figs. 9 and 10, the boom SEA 2031 includes a motor (not illustrated), a first disc 2330, a second disc 2340, and a plurality of elastic bodies 2350.

The motor includes a rotation shaft portion. The rotation shaft portion extends along a predetermined direction D1. The rotation shaft portion rotates around the predetermined direction D1. The rotation shaft portion rotates in a first rotation direction RR1 or rotates in a second rotation direction RR2. The second rotation direction RR2 is a reverse rotation direction of the first rotation direction RR1. Note that a speed reducer may be connected to the rotation shaft portion of the motor.

The first disc 2330 includes two protrusion portions 2362 and a circular plate body 2361. The diameter of the circular plate body 2361 is substantially the second distance r2. The two protrusion portions 2362 include a first protrusion portion 2362a and a second protrusion portion 2362b. Each of the two protrusion portions 2362 has a substantially T-shape. Each of the two protrusion portions 2362 includes an arc portion and a separation portion. The separation portion extends along the radial direction. The separation portion couples the circular plate body 2361 and the arc portion. The arcuate portion extends along the circumferential direction. Through holes are formed at both ends of the arc portion.

The circular plate body 2361 of the first disc 2330 is connected to the rotation shaft portion. For example, the central portion of the circular plate body 2361 of the first disc 2330 is connected to the rotation shaft portion on the side of the predetermined direction D1. As a result, the first disc 2330 rotates with the rotation of the rotation shaft portion. When the rotation shaft portion rotates in the first rotation direction RR1, the first disc 2330 also rotates in the first rotation direction RR1. On the other hand, when the rotation shaft portion rotates in the second rotation direction RR2, the first disc 2330 also rotates in the second rotation direction RR2.

The second disc 2340 is connected to the first disc 2330 and rotates with rotation of the first disc 2330. The second disc 2340 has the same configuration as the first disc 2330 described above.

The second disc 2340 includes two protrusion portions 2382 and a circular plate body 2381. The diameter of the circular plate body 2381 is substantially the second distance r2. The two protrusion portions 2382 include a first protrusion portion 2382a and a second protrusion portion 2382b. Each of the two protrusion portions 2382 has a substantially T-shape. Each of the two protrusion portions 2382 includes an arc portion and a separation portion. The separation portion extends along the radial direction. The separation portion couples the circular plate body 2381 and the arc portion. The arcuate portion extends along the circumferential direction. Through holes are formed at both ends of the arc portion.

The second disc 2340 is disposed in the predetermined direction D1 from the first disc 2330.

The central portion of the second disc 2340 is connected to the boom 301 illustrated in Fig. 1. As a result, when the second disc 2340 rotates, the boom 301 fluctuates. When the second disc 2340 rotates in the first rotation direction RR1, the boom 301 fluctuates. On the other hand, when the second disc 2340 rotates in the second rotation direction RR2, the boom 301 fluctuates.

Each of the plurality of elastic bodies 2350 is, for example, a coil spring having the first length XA and the spring constant K.

The plurality of elastic bodies 2350 includes an elastic body 2350a, an elastic body 2350b, an elastic body 2350c, and an elastic body 2350d. The elastic body 2350a is disposed between the first protrusion portion 2362a of the first disc 2330 and the first protrusion portion 2382a of the second disc 2340. The elastic body 2350b is disposed between the second protrusion portion 2362b of the first disc 2330 and the first protrusion portion 2382a of the second disc 2340. The elastic body 2350c is disposed between the second protrusion portion 2362b of the first disc 2330 and the second protrusion portion 2382b of the second disc 2340. The elastic body 2350d is disposed between the first protrusion portion 2362a of the first disc 2330 and the second protrusion portion 2382b of the second disc 2340. Each of the plurality of elastic bodies 2350 is stretchable in a tangent direction along the circumferential direction. For example, each of the plurality of elastic bodies 2350 is stretchable from the first length XA to a second length XB.

For example, when a motor rotates in the first rotation direction RR1, the first disc 2330 rotates in the first rotation direction RR1. When the first disc 2330 rotates in the first rotation direction RR1, the protrusion portions 2362 presses one end portion of the elastic body 2350. As a result, the elastic body 2350 contracts to the second length XB, and the other end portion of the elastic body 2350 presses the second disc 2340. In other words, the elastic body 2350 transmits the rotation of the first disc 2330 to the second disc 2340. As a result, the second disc 2340 rotates in the first rotation direction RR1. Thus, the boom 301 fluctuates.

On the other hand, when a motor rotates in the second rotation direction RR2, the first disc 2330 rotates in the second rotation direction RR2 When the first disc 2330 rotates in the second rotation direction RR2, the protrusion portion 2362 presses the other end portion of the elastic body 2350. As a result, the elastic body 2350 contracts to the second length XB, and one end portion of the elastic body 2350 presses the second disc 2340. In other words, the rotation of the first disc 2330 is transmitted to the second disc 2340. As a result, the second disc 2340 rotates in the second rotation direction RR2 Thus, the boom 301 fluctuates.

When the motor is stopped, the boom 301 may fluctuate due to external force. As a result, the fluctuation of the boom 301 is transmitted to the second disc 2340. For example, the second disc 2340 rotates in the first rotation direction RR1. At this time, the elastic body 2350 restrains the fluctuation of the boom 301 from being transmitted to the first disc 2330. Specifically, when the boom 301 fluctuates within a predetermined range, the elastic body 2350 restrains the fluctuation of boom 301 from being transmitted to the first disc 2330 via the second disc 2340.

Here, a principle of restraining transmission of the fluctuation of the boom 301 to the first disc 2330 will be described. First, when the boom 301 fluctuates, the second disc 2340 rotates in the first rotation direction RR1. When the second disc 2340 rotates in the first rotation direction RR1, the protrusion portion 2382 presses one end portion of the elastic body 2350. As a result, the elastic body 2350 contracts in the range of the first length XA to the second length XB. At this time, the other end portion of the elastic body 2350 presses the first disc 2330, but the energy due to the external force is buffered by the amount of contraction of the elastic body 2350. Thus, the energy transmitted to the motor is buffered.

As described above with reference to Figs. 9 and 10, even if the boom 301 and the like moves by external force when the motor is stopped, the elastic body 2350 can restrain transmission of the fluctuation of the boom 301 and the like to the first disc 2330. In detail, the energy due to the external force is buffered by the amount of contraction of the elastic body 2350. As a result, it is possible to restrain breakage of the motor at the time of stop. In addition, even if the boom 301 and the like is fluctuated, the force is not transmitted to the motor, in a manner that the position of the boom 301 and the like can be adjusted by a human hand during the work.

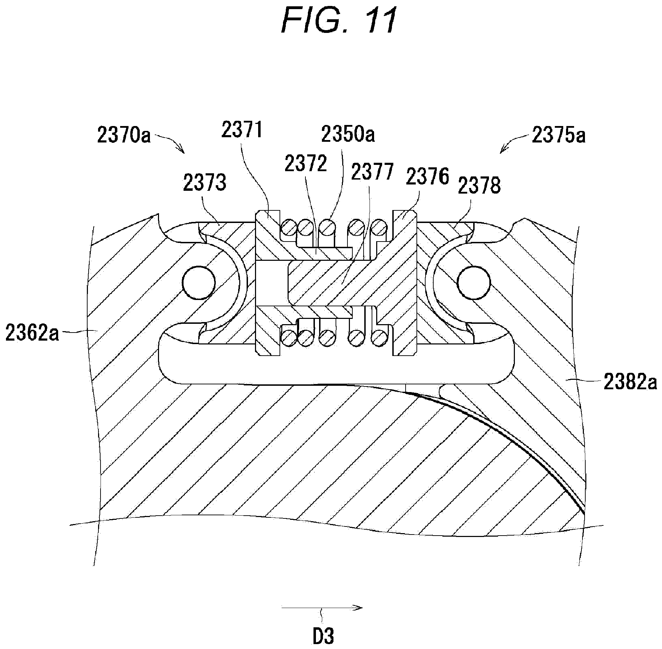

Next, the boom SEA 2031 according to the second embodiment will be described in detail with reference to Figs. 9 and 11. Fig. 11 is a cross-sectional view illustrating the boom SEA 2031. Specifically, Fig. 11 is a cross-sectional view illustrating the boom SEA 2031 when the motor is not rotating.

As illustrated in Figs. 9 to 11, the boom SEA 2031 includes a movement regulation member 2000. The movement regulation member 2000 regulates the movement of the elastic body 2350. As a result, it is possible to restrain application of a force in the regulated direction to the elastic body 2350. Specifically, the movement regulation member 2000 further includes a plurality of one-end-portion-side contact members 2370 and a plurality of other-end-portion-side contact members 2375.

The plurality of one-end-portion-side contact members 2370 is respectively disposed at one end portions of the plurality of elastic bodies 2350. The plurality of one-end-portion-side contact members 2370 includes a first one-end-portion-side contact member 2370a, a second one-end-portion-side contact member 2370b, a third one-end-portion-side contact member 2370c, and a fourth one-end-portion-side contact member 2370d.

Each of the plurality of one-end-portion-side contact members 2370 includes a first plate-shaped body 2371, a cylindrical portion 2372, and a connection portion 2373. The connection portion 2373 is disposed on one end surface of the first plate-shaped body 2371, and the cylindrical portion 2372 is disposed at a central portion of the other end surface of the first plate-shaped body 2371.

The first one-end-portion-side contact member 2370a is disposed between the first disc 2330 and the elastic body 2350a. Specifically, the cylindrical portion 2372 of the first one-end-portion-side contact member 2370a is inserted into one end portion of the elastic body 2350a. In addition, the connection portion 2373 of the first one-end-portion-side contact member 2370a is rotatably connected to the through hole of the first protrusion portion 2362a. Specifically, the connection portion 2373 of the first one-end-portion-side contact member 2370a is connected to be rotatable about a direction along the central axis of the first disc 2330 as a rotation shaft.

The plurality of other-end-portion-side contact members 2375 is respectively disposed at the other end portions of the plurality of elastic bodies 2350. The plurality of other-end-portion-side contact members 2375 includes a first other-end-portion-side contact member 2375a, a second other-end-portion-side contact member 2375b, a third other-end-portion-side contact member 2375c, and a fourth other-end-portion-side contact member 2375d.

Each of the plurality of other-end-portion-side contact members 2375 includes a second plate-shaped body 2376, a cylindrical portion 2377, and a connection portion 2378. The connection portion 2378 is disposed on one end surface of the second plate-shaped body 2376, and the cylindrical portion 2377 is disposed at a central portion of the other end surface of the second plate-shaped body 2376.

The first other-end-portion-side contact member 2375a is disposed between the second disc 2340 and the elastic body 2350a. Specifically, the cylindrical portion 2377 of the first other-end-portion-side contact member 2375a is rotatably inserted into the other end portion of the elastic body 2350a. In addition, the connection portion 2378 of the first other-end-portion-side contact member 2375a is rotatably connected to the through hole of the first protrusion portion 2382a. Specifically, the connection portion 2373 of the first one-end-portion-side contact member 2370a and the connection portion 2378 of the first other-end-portion-side contact member 2375a are connected to be rotatable about a direction along the central axis of the second disc 2340 as a rotation shaft.

The one-end-portion-side contact member 2370 is movable with respect to the other-end-portion-side contact member 2375. For example, the first one-end-portion-side contact member 2370a is movable with respect to the first other-end-portion-side contact member 2375a. Specifically, the cylindrical portion 2377 is inserted into the cylindrical portion 2372. Specifically, the first one-end-portion-side contact member 2370a is movable along a setting direction D3 with respect to the first other-end-portion-side contact member 2375a. The setting direction D3 is perpendicular to the first plate-shaped body 2371 and the second plate-shaped body 2376. As a result, the one-end-portion-side contact member 2370 and the other-end-portion-side contact member 2375 can restrain non-uniform application of a force to the inner peripheral side portion and the outer peripheral side portion of the elastic body 2350. As a result, the elastic body 2350 can act with the spring constant K.

The second one-end-portion-side contact member 2370b and the second other-end-portion-side contact member 2375b are disposed at both end portions of the elastic body 2350b, respectively. The third one-end-portion-side contact member 2370c and the third other-end-portion-side contact member 2375c are disposed at both end portions of the elastic body 2350c, respectively. The fourth one-end-portion-side contact member 2370d and the fourth other-end-portion-side contact member 2375d are disposed at both end portions of the elastic body 2350d, respectively.

Here, a principle of restraining transmission of the fluctuation of the boom 301 to the first disc 2330 will be described. For example, when the boom 301 fluctuates, the second disc 2340 rotates in the first rotation direction RR1. When the second disc 2340 rotates in the first rotation direction RR1, the protrusion portion 2382 presses the one-end-portion-side contact member 2370 of the elastic body 2350. The one-end-portion-side contact members 2370 presses one end portion of the elastic body 2350 while rotating. When the one-end-portion-side contact members 2370 presses one end portion of the elastic body 2350, the one-end-portion-side contact members 2370 and the other-end-portion-side contact member 2375 rotate to apply a substantially uniform force to the inner peripheral side portion and the outer peripheral side portion of the elastic body 2350. In other words, the one-end-portion-side contact member 2370 and the other-end-portion-side contact member 2375 can restrain non-uniform application of a force to the inner peripheral side portion and the outer peripheral side portion of the elastic body 2350. As a result, the elastic body 2350 can act with the spring constant K.

As a result, the elastic body 2350 contracts in the range of the first length XA to the second length XB. At this time, the other end portion of the elastic body 2350 presses the first disc 2330, but the energy due to the external force is buffered by the amount of contraction of the elastic body 2350. Thus, the energy transmitted to the motor is buffered.

As described above, even if the boom 301 and the like moves by external force when the motor is stopped, the elastic body 2350 can restrain transmission of the fluctuation of the boom 301 and the like to the first disc 2330. As a result, it is possible to restrain breakage of the motor at the time of stop.

In addition, each of the plurality of elastic bodies 2350 is disposed in a compressed state. In other words, each of the plurality of elastic bodies 2350 is disposed in a preloaded state. As a result, the elastic body 2350 is used in a range in which it acts with the spring constant K. Thus, the elastic body 2350 can act with the spring constant K.

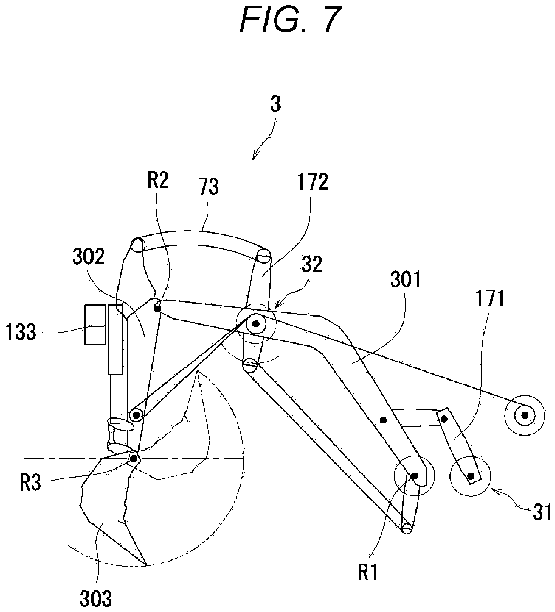

The embodiments of the present invention have been described above with reference to the drawings. However, the present invention is not limited to the above embodiments, and can be implemented in various aspects without departing from the gist. In addition, various inventions can be formed by appropriately combining a plurality of components disclosed in each of the above embodiments. For example, some components may be deleted from all the components shown in the embodiments. Furthermore, components in different embodiments may be appropriately combined. For easy understanding, the drawings schematically illustrate each component mainly, and the thickness, length, number, interval, and the like of each illustrated component are different from the actual thickness, length, number, interval, and the like for convenience of creating the drawings. In addition, the speed, material, shape, dimension, and the like of each component shown in the above embodiments are merely examples, and are not particularly limited, and various modifications can be made without substantially departing from the configuration of the present invention.
(1) In the work unit 3 of the work machine 1 of the present embodiment, the boom SEA 31 is disposed at the first rotation support point R1, the arm SEA 32 is disposed at the second rotation support point R2, and the bucket SEA 33 is disposed at the third rotation support point R3, but it is not limited to this. Fig. 7 is a diagram illustrating the work unit 3. For example, the boom SEA 31 may be coupled to the boom 301 via a coupling member 171, and the arm SEA 32 may be coupled to the arm 302 via a coupling member 172. Furthermore, the work unit 3 includes the bucket SEA 33, but is not limited to this. For example, the work unit 3 may include a bucket cylinder 133.

The coupling member 171 couples the boom 301 and the boom SEA 31. The boom SEA 31 is disposed near the first rotation support point R1 and actuates the boom 301 via the coupling member 171. Specifically, the boom SEA 31 swings the boom 301 about the first rotation support point R1.

The coupling member 172 is coupled to the arm 302 via an elastic link 73. The arm SEA 32 is disposed on the boom 301 and actuates the arm 302 via the coupling member 172. Specifically, the arm SEA 32 swings the arm 302 about the second rotation support point R2.

The bucket cylinder 133 actuates the bucket 303. Specifically, the bucket cylinder 133 swings the bucket 303 about the third rotation support point R3. The bucket cylinder 133 includes a cylinder body and a rod. The rod moves back and forth inside the cylinder body, and the rod actuates the bucket 303.

(2) In the work unit 3 of the work machine 1 of the present embodiment, the boom SEA 31 is disposed at the first rotation support point R1, the arm SEA 32 is disposed at the second rotation support point R2, and the bucket SEA 33 is disposed at the third rotation support point R3, but it is not limited to this. The arm SEA 32 may be disposed near the first rotation support point R1, and the bucket SEA 33 may be disposed near the first rotation support point R1. The arm SEA 32 may be coupled to the arm 302 via a worm gear and a universal joint. The bucket SEA 33 may be coupled to the bucket 303 via a worm gear and a universal joint. As a result, the arm SEA 32 and the bucket SEA 33 can be disposed below, and the center of gravity of the work unit 3 can be stabilized.

(3) In the work unit 3 of the work machine 1 of the present embodiment, the boom SEA 31 is disposed at the first rotation support point R1, the arm SEA 32 is disposed at the second rotation support point R2, and the bucket SEA 33 is disposed at the third rotation support point R3, but it is not limited to this. The arm SEA 32 may be disposed near the first rotation support point R1, and the bucket SEA 33 may be disposed near the first rotation support point R1. The arm SEA 32 may be coupled to the arm 302 via a chain or a wire. The bucket SEA 33 may be coupled to the bucket 303 via a chain or a wire. As a result, the arm SEA 32 and the bucket SEA 33 can be disposed below, and the center of gravity of the work unit 3 can be stabilized.

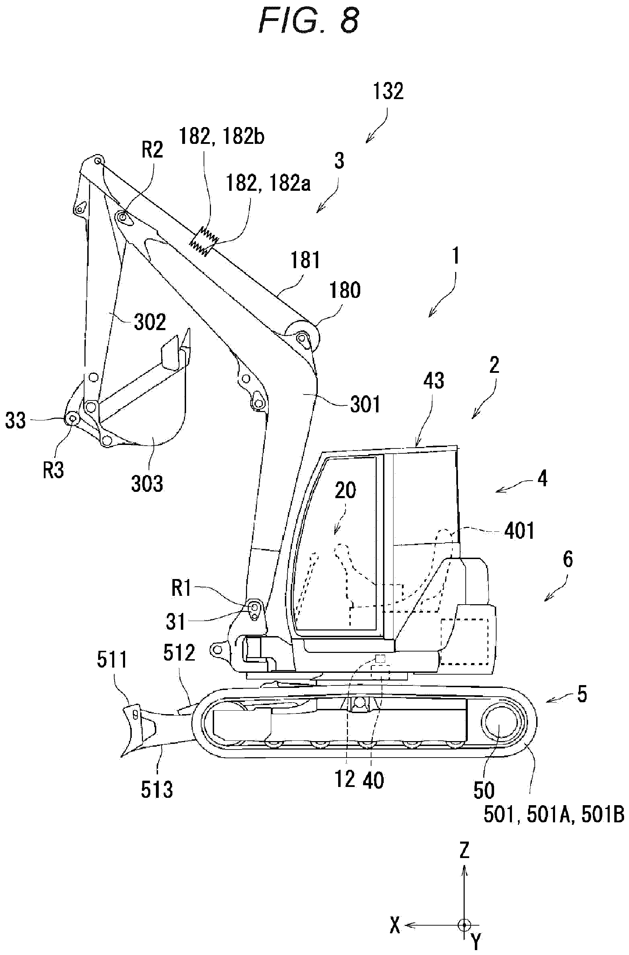

(4) In the work unit 3 of the work machine 1 of the present embodiment, the arm SEA 32 is disposed at the second rotation support point R2, but it is not limited to this. Fig. 8 is a diagram illustrating the work unit 3. For example, an arm SEA 182 may be disposed on the boom 301. The arm SEA 182 is an example of a "drive device". The arm SEA 182 includes a plurality of elastic bodies 182, a wire 181, and a drive unit 180. The drive unit 180 includes a motor, the first disc, and the second disc portion. That is, the drive unit 180 does not include an elastic body. The wire 181 couples the drive unit 180 and the arm 302. The plurality of elastic bodies 182 includes an elastic body 182a and an elastic body 182b. The plurality of elastic bodies 182 is disposed in parallel in the wire 181. In other words, the plurality of elastic bodies 182 is connected to the arm 302. As a result, the plurality of elastic bodies 182 transmits the rotation of the motor to the arm 302. In addition, the plurality of elastic bodies 182 restrains transmission of load fluctuation to the second disc and the third disc.

As described above, even if the arm 302 and the like moves by external force when the motor is stopped, the elastic body 182 can restrain transmission of the fluctuation of the arm 302 and the like to the first disc 330. As a result, it is possible to restrain breakage of the motor at the time of stop.

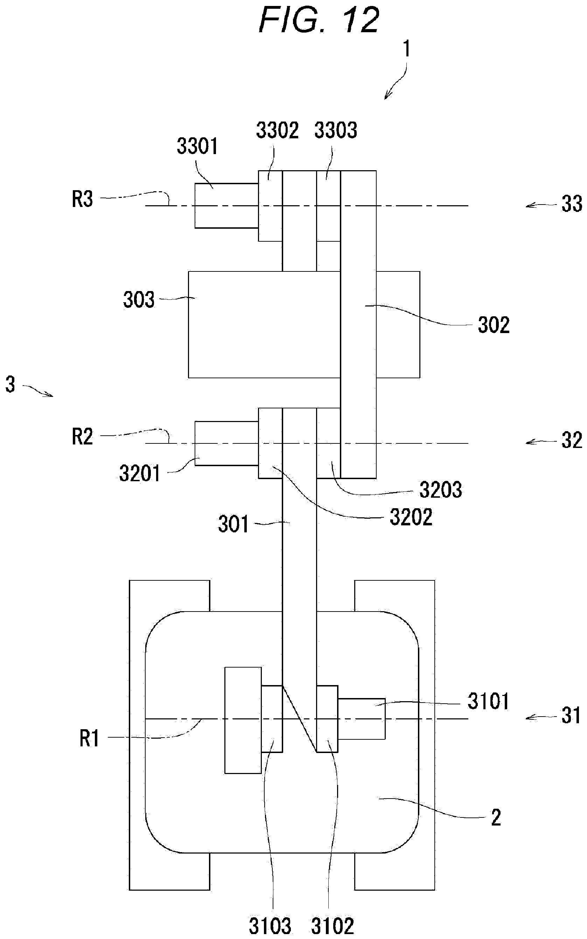

(5) In the work machine 1 of the present embodiment, a speed reducer may be connected to the rotation shaft portion of the motor. Fig. 12 is a view illustrating the work machine according to the present embodiment. As illustrated in Fig. 12, in the work unit 3 of the work machine 1, the boom SEA 31 is disposed at the first rotation support point R1, the arm SEA 32 is disposed at the second rotation support point R2, and the bucket SEA 33 is disposed at the third rotation support point R3. The arm SEA 32 includes a motor 3201, a speed reducer 3202, and a disc portion 3203. The disc portion 3203 includes a first disc, a second disc portion, and a plurality of elastic bodies. The bucket SEA 33 includes a motor 3301, a speed reducer 3302, and a disc portion 3303. The disc portion 3303 includes a first disc, a second disc portion, and a plurality of elastic bodies.

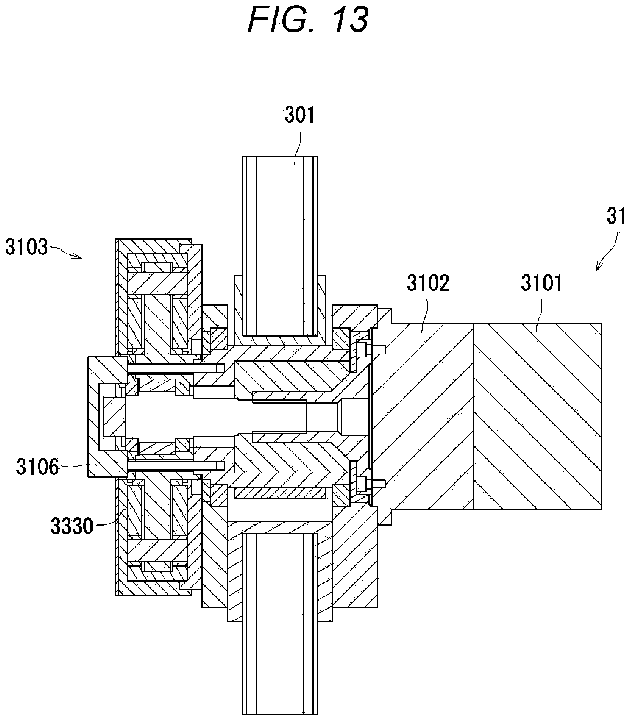

Next, the boom SEA 31 will be described in detail with reference to Fig. 13. Fig. 13 is a cross-sectional view illustrating the boom SEA 31 according to the present embodiment. As illustrated in Fig. 13, the boom SEA 31 includes a motor 3101, a speed reducer 3102, and a disc portion 3103. The disc portion 3103 includes a first disc 3330, a second disc portion (not illustrated), and a plurality of elastic bodies (not illustrated).

The work machine 1 further includes a detection unit 3016 that detects the length of the elastic body. The detection unit 3016 detects a position of the end portion of the elastic body of boom SEA 31. The detection unit 3016 is, for example, a rotary encoder disposed on the first disc 3330. The detection unit 3016 outputs the detection result to the control unit 11. As a result, the control unit 11 can recognize the force acting on the boom 301 by one detection unit 3016.

(6) The boom SEA 2031 of the work machine 1 of the present embodiment includes the movement regulation member 2000, but it is not limited to this. The boom SEA 2031 may further include a plurality of first attachment members and a plurality of second attachment members.

The first attachment member is disposed at one end portion of the elastic body 2350. In addition, the first attachment member is rotatably attached to the first disc 2330 or the second disc 2340.

The second attachment member is disposed at the other end portion of the elastic body 2350. In addition, the second attachment member is rotatably attached to the first disc 2330 or the second disc 2340.

Here, a principle of restraining transmission of the fluctuation of the boom 301 to the first disc 2330 will be described. For example, when the boom 301 fluctuates, the second disc 2340 rotates in the first rotation direction RR1. When the second disc 2340 rotates in the first rotation direction RR1, the protrusion portion 2382 presses the first attachment member of the elastic body 2350. The first attachment member presses one end portion of the elastic body 2350 while rotating. When the first attachment member presses one end portion of the elastic body 2350, the first attachment member and the second attachment member rotate to apply a substantially uniform force to the inner peripheral side portion and the outer peripheral side portion of the elastic body 2350. In other words, the first attachment member and the second attachment member can restrain non-uniform application of a force to the inner peripheral side portion and the outer peripheral side portion of the elastic body 2350. As a result, the elastic body 2350 can act with the spring constant K.

### INDUSTRIAL APPLICABILITY

The present invention provides a work machine, and has industrial applicability.

### LIST OF REFERENCE SIGNS

- 1: Work machine
- 2: Main body portion
- 3: Work unit
- 4: Swing body
- 5: Traveling body
- 31: Boom SEA (drive device)
- 32: Arm SEA (drive device)
- 33: Bucket SEA (drive device)
- 330: First disc
- 340: Second disc
- 350: Elastic body
- 1340: Second disc portion

## Claims

1. A drive device comprising:
a first disc that is connected to a rotation shaft portion of a motor and rotates with rotation of the rotation shaft portion;
a second disc portion that is connected to the first disc and rotates with rotation of the first disc; and
an elastic body that is connected to the second disc portion,
wherein the second disc portion is connected to a load, and
the elastic body restrains transmission of fluctuation of the load to the first disc.

2. The drive device according to claim 1, wherein when the load fluctuates within a predetermined range, the elastic body restrains the transmission of the fluctuation of the load to the first disc.

3. The drive device according to claim 1 or 2, wherein the elastic body is connected between the first disc and the second disc portion.

4. The drive device according to claim 3, wherein
the first disc includes a first opening portion penetrating in a predetermined direction,
the second disc portion includes a second opening portion penetrating in the predetermined direction,
the second disc portion is disposed in the predetermined direction with respect to the first disc, and
the elastic body is disposed across the first opening portion and the second opening portion.

5. The drive device according to claim 4 comprising a plurality of the elastic bodies,
wherein the first disc includes a plurality of the first opening portions disposed along a circumferential direction,
the second disc portion includes a plurality of the second opening portions disposed along the circumferential direction, and
each of the plurality of elastic bodies is disposed across the plurality of first opening portions and the plurality of second opening portions.

6. The drive device according to claim 1 or 2, wherein the elastic body is connected between the load and the second disc portion.

7. The drive device according to any one of claims 1 to 6, further comprising a detection unit that detects a length of the elastic body.

8. The drive device according to any one of claims 1 to 7, further comprising a contact member disposed at both end portions of the elastic body,
wherein the second disc portion includes:
a third disc that is connected to the load; and
a second disc that rotates with rotation of the third disc,
the rotation of the third disc is transmitted to the elastic body via the contact member, and
the contact member is rotatable with respect to the third disc.

9. The drive device according to claim 3, further comprising a movement regulation member that regulates movement of the elastic body.

10. The drive device according to claim 9, wherein
the movement regulation member further includes:
a one-end-portion-side contact member disposed on one end portion of the elastic body; and
an other-end-portion-side contact member disposed on another end portion of the elastic body, and
the one-end-portion-side contact member is movable with respect to the other-end-portion-side contact member.

11. The drive device according to claim 10, wherein
the one-end-portion-side contact member includes a first plate-shaped body,
the other-end-portion-side contact member includes a second plate-shaped body parallel to the first plate-shaped body,
the one-end-portion-side contact member is movable along a setting direction with respect to the other-end-portion-side contact member, and
the setting direction is perpendicular to the first plate-shaped body and the second plate-shaped body.

12. The drive device according to claim 10 or 11, wherein
the one-end-portion-side contact member is rotatable with respect to the first disc or the second disc portion, and
the other-end-portion-side contact member is rotatable with respect to the first disc or the second disc portion.

13. The drive device according to any one of claims 9 to 12, comprising the plurality of the elastic bodies disposed along the circumferential direction,
wherein each of the plurality of elastic bodies is disposed in a compressed state.

14. The drive device according to any one of claims 9 to 13, further comprising a detection unit that detects a length of the elastic body,
wherein the detection unit is disposed in the first disc.

15. The drive device according to claim 3, further comprising:
a first attachment member disposed at one end portion of the elastic body and rotatably attached to the first disc or the second disc portion; and
a second attachment member disposed at another end portion of the elastic body and rotatably attached to the first disc or the second disc portion.

16. A work machine comprising:
the drive device according to any one of claims 1 to 15;
a load that is connected to the drive device; and
a control unit that controls the drive device.
